# EUROPÄISCHE PATENTANMELDUNG

(11) **EP 4 124 375 A1**
(43) Veröffentlichungstag der Anmeldung: **01.02.2023**
(21) Anmeldenummer: 21188297.2
(22) Anmeldetag: 28.07.2021
(51) Int. Cl.: B01D 46/00, B01D 46/10

(54) **FILTER MIT EINEM FILTERRAHMEN AUS ZWEI RAHMENTEILEN**

(71) Anmelder: Carl Freudenberg KG, 69469 Weinheim (DE)
(72) Erfinder: Sieh, Maik, 69207 Sandhausen (DE); Schumacher, Sascha, 69483 Wald-Michelbach (DE)

(57) **Zusammenfassung**

Die Erfindung betrifft einen Filter (10) zur Filtration von Luft (L) mit einem Filterrahmen (1), in welchem mindestens ein Filterelement (3) aufgenommen ist.

Erfindungsgemäß besteht der Filterrahmen (1) aus zwei Rahmenteilen (1.1, 1.2) und ist das mindestens eine Filterelement (3) zwischen den zwei Rahmenteilen (1.1, 1.2) aufgenommen. Vorteilhafter Weise sind die zwei Rahmenteile (1.1, 1.2) als zwei Halbschalen ausgeführt.

Vorteil eines Filters (10) mit einem solchen Filterrahmen (1) ist dessen einfacher Aufbau und sich ergebende Vorteile bei Fertigung und Montage.

## Beschreibung

Die Erfindung betrifft einen Filter mit einem Filterrahmen, in welchem mindestens ein Filterelement aufgenommen ist.

### Stand der Technik

Aus dem Stand der Technik sind Filter zur Filtration von Fluiden bekannt, insbesondere von Luft. Hierzu werden die Filterelemente üblicherweise in Filtergehäuse eingesetzt und von Luft durchströmt.

Aus dem Stand der Technik sind unterschiedlichste Filterelemente zum Filtern von Innenraumluft bekannt. In der DE 10 2013 011 457 A1 wird ein Innenraumluftfilterelement für die Fahrerkabine von Land- und Arbeitsmaschinen, insbesondere mit Spritz- oder Sprühvorrichtungen für Pflanzenschutz- oder Düngemittel beschrieben.
Das Innenraumluftfilterelement umfasst eine Adsorptionsfilterlage mit Aktivkohle, eine Feinfilterlage, insbesondere zur Abscheidung von Aerosolen und eine umlaufende Dichtung zur Trennung der Rohseite von der Reinseite beim Einbau in ein Filtergehäuse. Ein derart mehrstufiger Filter wird auch als Multistage-Filter bezeichnet. Das Innenraumluftfilterelement besitzt einen spritzgegossenen Kunststoffrahmen, welcher vorgefertigt sein kann und die Teilfilterelemente in sich aufnimmt, die im Rahmen verklebt oder verschweißt werden. Die Ausgestaltung von Positionier- Arretier- und Abgrenzungselementen für die jeweiligen Filterstufen ist aufwändig und schwierig, da Hinterschnitte in der Spritzgussform vermieden werden müssen und die Verwendung von beweglichen Komponenten (Stempel, Auswerfer) des Spritzgusswerkzeuges auf ein Minimum beschränkt sein soll.
Alternativ kann der Rahmen als umspritzter Rahmen ausgebildet sein, der dadurch gebildet wird, dass die verschiedenen Filterelemente in eine Form eingelegt und anschließend mit einem Spritzgussrahmen umspritzt werden, wobei das Material sich beim Aushärten unlösbar mit den verschiedenen Filterelementen verbindet. Auch hierfür werden aufwändige Spritzgusswerkzeuge benötigt, welche Haltestifte für die Filterelemente aufweisen müssen.
Alternativ kann der Rahmen auch als mehrteiliger, in der Regel zumindest vierteiliger, Rahmen aus Kunststoffleisten ausgebildet sein, welche jeweils mittels Eckverbinder miteinander verbunden werden. Solche Rahmen leckagefrei und damit HEPA-filtertauglich zu fertigen ist schwierig (HEPA = High-Efficieny-Pariculate-Air).
Nachteilig bei allen bekannten Arten von Filtern ist also der hohe Aufwand und sind die hohen Kosten bei der Fertigung des Rahmens und der Montage der Filterelemente in dem Rahmen.

### Aufgabenstellung

Aufgabe der vorliegenden Erfindung ist es einen ein HEPA-filtertauglicher Filter zu schaffen, welcher mit möglichst geringem Fertigungs- und Montageaufwand zu realisieren ist.

### Technische Lösung

Gelöst wird diese Aufgabe durch einen Filter wie er nachfolgend beschrieben und beansprucht ist.

Erfindungsgemäß wurde als vorteilhaft erkannt den Filterrahmen aus zwei zusammensetzbaren Rahmenteilen aufzubauen.

Der erfindungsgemäße Filter dient zur Filtration von Luft und besitzt einen Filterrahmen und mindestens ein Filterelement, welches in dem Filterrahmen aufgenommen ist. In vorteilhafter Weise besteht der Filterrahmen aus zwei Rahmenteilen, welche zusammen den Filterrahmen bilden und das mindestens eine Filterelement ist zwischen den zwei Rahmenteilen aufgenommen. Ein jeweiliges Rahmenteil kann - in seinem Querschnitt - insbesondere die Form eines U-Profils aufweisen. Der Rahmen setzt sich also aus zwei U-Profilen zusammen.
Es handelt sich bei den beiden Rahmenteilen um Komponenten des Filters, nicht um Teile eines Gehäuses. In einem Gehäuse wird der ganze Filter aufgenommen, kann in dieses eingeführt und aus diesem wieder entfernt werden. Während das Gehäuse, z.B. aus Metall, dauerhaft genutzt wird, wird der Filter mit seinem Filterrahmen ausgetauscht, sobald er mit Partikeln zugesetzt ist und seine Filtrationswirkung nicht mehr ausreicht. Außen an dem Filterrahmen kann eine Dichtung angeordnet sein, welche eine Abdichtung gegenüber einem Gehäuse bewirkt.

Vorteil eines Filters mit einem solchen Filterrahmen ist dessen einfacher Aufbau. Ein kompliziertes Zusammensetzen aus mehreren Profilleisten ist genauso wenig erforderlich wie kompliziert aufgebaute Spritzgusswerkzeuge für einen einteiligen Filterrahmen. Ein erfindungsgemäßer Filter verbindet eine gute Automatisierung der Fertigung der Rahmenteile des Filters mit einer einfachen Montage der Filterelemente in ein Rahmenteil des Filterrahmens. Auch können die Filterrahmen individuell mit Filterelementen bestückt werden und können so einfach unterschiedliche Filter entsprechend den Anforderungen an die Filtrationsleistung und abhängig von den Einsatzgebieten des Filters geschaffen werden.

Vorteilhafter Weise sind die zwei Rahmenteile als zwei Halbschalen ausgeführt, welche identisch in Form und Aufbau sind. Es ergibt sich der montagetechnische Vorteil, dass die beiden Rahmenteile nicht falsch zusammengesetzt werden können.

In einem besonders vorteilhaften und daher bevorzugten Filter sind die Rahmenteile als Spritzgusselemente ausgeführt. Eine kostengünstige Fertigung in großen Stückzahlen wird so ermöglicht. Werden beiden Rahmenteile als identische Halbschalen ausgebildet, so folgt der fertigungstechnische Vorteil, dass nur ein Spritzgusswerkzeug für beide Halbschalen erforderlich ist.
Als Material für die Rahmenteile kann ein spritzgussfähiger Kunststoff, insbesondere ein Acrylnitril-Butadien-Styrol (ABS) verwendet werden.

Der Filter kann einen mehrstufigen Aufbau besitzen, einen sogenannten-Multistage-Aufbau, um eine verbesserte Filtrationsleistung zu gewährleisten. Dazu ist eine Mehrzahl von Filterelementen in Reihe in dem Filterrahmen angeordnet. Bei den Filterelementen kann es sich um Filtermatten, Faltenbalge aus Filtermedium, Aktivkohleelemente, Honeycombs, HEPA-Filterelemente, etc. handeln.
So kann beispielsweise die erste Filterstufe als Vorfilter, die zweite Filterstufe als Feinfilter, welcher auch als Aerosolfilter bezeichnet werden kann, und die dritte Filterstufe als Adsorptionsfilter ausgebildet sein. Der Vorfilter und der Feinfilter können zum Beispiel als plissiertes Faltenpaket, auch als Faltenpack bezeichnet, aus organischem und/oder anorganischem Vliesstoff und der Adsorptionsfilter zum Beispiel als Filterkörper aus Aktivkohle oder mit einer Aktivkohlebeschichtung ausgeführt sein.

In vorteilhafter Weiterbildung des Filters mit mehreren Filterstufen sind auf der Innenseite der zwei Rahmenteile umlaufende Stege zur Abgrenzung der Filterelemente verschiedener Filterstufen vorgesehen. Die Stege können auch als Wulste oder Erhebungen bezeichnet werden. Zusätzlich oder alternativ sind hervorstehende Positionier- und Arretierelemente zum Positionieren und Arretieren der Filterelemente vorgesehen. Die Stege bzw. Positionier- und Arretierelemente sind jeweils einteilig mit den Rahmenteilen gefertigt.

In Weiterbildung des Filters sind Stoßkanten der beiden Halbschalen, d.h. der Bereich, wo sich die beiden Halbschalen berühren, als Labyrinthdichtung ausgestaltet, z.B. unter Verwendung von sich überlappende Nasen oder von einer Nut-Feder-Verbindung. So wird eine sichere Abdichtung der beiden Halbschalen zueinander gewährleistet. In Versuchen wurde überraschend festgestellt, dass die Dichtigkeit eine solchen Labyrinthdichtung auch HEPA-Anforderungen genügt.
In einer möglichen, fertigungstechnisch günstigen Ausführungsform weist die Oberschale auf der linken Seitenkante eine vorstehende Nase, auf der rechten Seitenkante eine zurückgesetzte Nase und die Unterschale auf der linken Seitenkante eine zurückgesetzte Nase und auf der rechten Seitenkante eine vorstehende Nase auf. Die Nasen haben jeweils einen Aufbau komplementär zueinander mit entsprechenden Dichtflächen.

Als besonders vorteilhaft wurde erkannt, den Feinfilter als HEPA-Filter, d. h. als High-Efficieny-Pariculate-Air-Filter auszuführen. Bei Versuchen wurde herausgefunden, dass der Filter insgesamt den HEPA-Anforderungen genügt.

In Weiterbildung des erfindungsgemäßen Filters sind an den Halbschalen im Bereich ihrer Stoßkanten Rastelemente zum Einklipsen der beiden Halbschalen ineinander vorgesehen, insbesondere mindestens vier Rastelementpaare. Die Rastelemente können insbesondere als Rastnasen und Rastclipps ausgebildet sein, welche beim Zusammenstecken der Halbschalen ineinander verrasten und so eine formschlüssige Verbindung der Halbschalen gewährleisten. Dadurch ist in vorteilhafter Weise eine werkzeugfreie Montage der beiden Halbschalen zur Schaffung des Filterrahmens ermöglicht. Die Verwendung von vier Rastelementpaaren ist für eine sichere Verbindung der Halbschalen ausreichend. Eine besonders sichere Verbindung wird durch die Verwendung von sechs Rastelementpaaren erreicht.
In einer möglichen, montagetechnisch günstigen Ausführungsform weist die Oberschale auf der linken Seitenkante drei Rastclipps, auf der rechten Seitenkante drei Rastnasen und die Unterschale auf der linken Seitenkante drei Rastnasen und auf der rechten Seitenkante drei Rastclipps auf.

In Weiterbildung des Filters ist an der Außenseite des Filterrahmens eine Dichtung angebracht, insbesondere eine umlaufende Dichtung, zur Abdichtung des Filters gegenüber einem den Filter aufnehmenden Gehäuse. Die Dichtung ist dabei insbesondere einteilig ausgestaltet, sodass die Rahmenteile von der Dichtung umfasst werden und im Falle einer stoffschlüssig angebrachten Dichtung unlösbar miteinander verbunden sind.
Die Dichtung kann insbesondere als Spritzgusselement ausgeführt sein, welches an die Rahmenteile angespritzt ist.
Als Material für die Dichtung kann ein spritzgussfähiges Elastomer verwendet werden, insbesondere ein TPE.

Die Erfindung betrifft auch eine Filteranordnung mit einem wie vorstehend beschriebenen Filter mit einem Gehäuse zur Aufnahme des Filters. Die Erfindung betrifft auch die Verwendung eines wie obenstehend beschriebenen Filter als Innenraumluftfilter zur Filtration und Reinigung der Kabinenzuluft in einem Fahrzeug, welches einer erhöhten Schadstoffbelastung unterliegt, insbesondere in einem Nutzfahrzeug, einem Schwerlastfahrzeug oder einem Offroadfahrzeug. Bei den Fahrzeugen kann es sich beispielsweise handeln um Lastkraftwagen, Baumaschinen, Landmaschinen oder Forstfahrzeuge.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.
Es zeigen in schematischer Darstellung
- Fig. 1a: zwei Halbschalen eines Filters in einer Explosionsdarstellung
- Fig. 1b: zwei montierte Halbschalen des Filters aus Fig. 1a
- Fig. 2a: eine Halbschale in einer Ansicht
- Fig. 2b: die Halbschale aus Fig. 2a nachdem Filterelemente eingesetzt wurden
- Fig. 3: eine räumliche Darstellung einer Ausführungsform eines Kassettenfilters
- Fig. 4: eine grob schematische Ansicht einer Filteranordnung

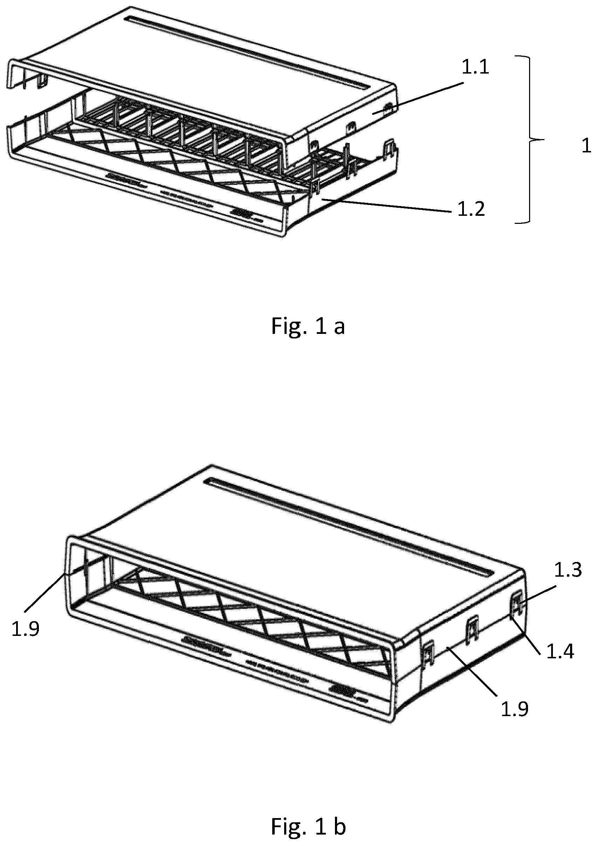

Fig.1a zeigt zwei Halbschalen 1.1 und 1.2 eines Filterrahmens 1 eines Filters 10 in einer Explosionsdarstellung. Die Halbschale 1.1 kann als Oberschale und die Halbschale 1.2 als Unterschale bezeichnet werden. Die Halbschalen 1.1, 1.2 haben jeweils die Form eines U-Profils und können zu einem Filterrahmen 1 zusammengesetzt werden, welcher dann in etwa die Form eines Rechteckrohres hat. In der hier dargestellten Ausführungsform sind beide Halbschalen 1.1 und 1.2 identisch in Form und Aufbau. Die Halbschalen 1.1 und 1.2 sind als Kunststoff-Spritzgussteile ausgebildet.

Fig. 1b zeigt die zwei Halbschalen 1.1 und 1.2 des Filters 10 aus Fig. 1a nachdem diese montiert, d.h. zusammengesetzt wurden. Für eine sichere und dauerhafte Verbindung der beiden Halbschalen 1.1, 1.2 sind an diesen im Bereich ihrer Stoßkanten 1.9 Rastelemente angebracht, nämlich Rastnasen 1.3 und Rastclipps 1.4, welche beim Zusammenstecken der Halbschalen 1.1 und 1.2 ineinander einrasten und so eine formschlüssige Rastverbindung ausbilden.

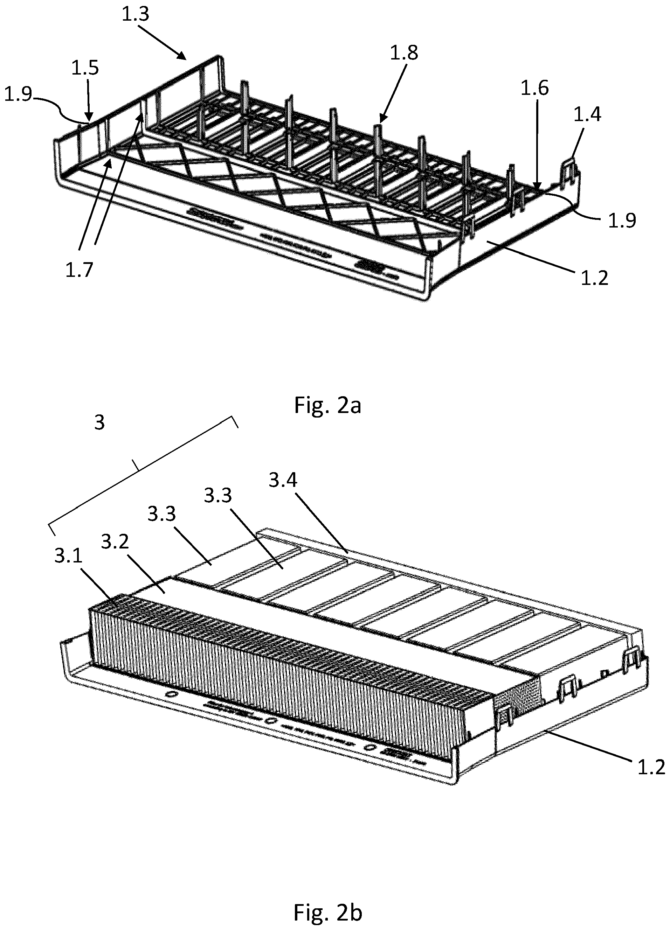

Fig. 2a zeigt eine Halbschale 1.2 in einer Ansicht, aus welcher die Details der Halbschale 1.2 ersichtlich werden. Eine hier nicht dargestellte Halbschale 1.1 kann denselben Aufbau besitzen. Im Bereich der linken Stoßkante 1.9 besitzt die Halbschale 1.2 drei Rastnasen 1.3 (nicht sichtbar). Im Bereich der rechten Stoßkante 1.9 besitzt die Halbschale 1.2 drei Rastclipps 1.4, welche über die Stoßkante 1.9 hinausragen. Rastnasen 1.3 und Rasclipps 1.4 haben komplementär ausgestaltete Formelemente, welche - bei zusammengesetzten Halbschalen 1.1, 1.2 - zusammen eine Rastverbindung ausbilden.
An der linken Stoßkante 1.9 besitzt die Halbschale 1.2 eine erste Nase 1.5. An der rechten Stoßkante 1.9 besitzt die Halbschale 1.2 eine zweite Nase 1.6. Beide Nasen 1.5 und 1.6 sind komplementär ausgestaltet und bilden - bei zusammengesetzten Halbschalen 1.1, 1.2 - zusammen eine Labyrinthdichtung und damit eine leckagefreie Verbindung der Halbschalen 1.1, 1.2 aus.
Auf der Innenseite der Halbschale 1.2 sind erhabene Stege 1.7 vorhanden. Diese können einteilig mit der Halbschale 1.2 als ein Spritzgussteil gefertigt sein Eine jeweiliger Steg 1.7 verläuft von der einen Stoßkante 1.9 zur anderen Stoßkante 1.9. Wie sich aus Fig. 2b ergibt, dienen die Stege 1.7 zur Abgrenzung verschiedener Filterelemente 3.1, 3.2, 3.3 und 3.4 zueinander und zu deren Abdichtung gegenüber den Halbschalen 1.1, 1.2.
Auf der Innenseite der Halbschale 1.2 sind hervorstehende Positionier- und Arretierelemente 1.8 vorhanden. Diese können einteilig mit der Halbschale 1.2 als ein Spritzgussteil gefertigt sein. Wie sich aus Fig. 2b ergibt, dienen die Positionier- und Arretierelemente 1.8 dazu verschiedenen Filterelementen 3.3 eine exakte Position zuzuweisen und diese in dieser Position zu halten.

Fig. 2b zeigt die Halbschale 1.2 aus Fig. 2a, nachdem Filterelemente 3.1-3.4 in diese eingesetzt wurden. Mit einem solchen Aufbau lässt sich ein mehrstufiger Filter 10 mit vier Filterstufen schaffen. Im Betrieb des Filters 10 werden die in Reihe geschalteten Filterelemente 3.1, 3.2, 3.3 und 3.4 nacheinander durchströmt und bewirken so eine hohe Filtrationsleistung des Filters 10. Bei dem Filterelement 3.1 handelt es sich um einen Staubfilter, bei dem Filterelement 3.2 handelt es sich um einen Aerosolfilter, bei dem Filterelement 3.3 handelt es sich um Adsorptionsfilter welche parallel zueinander angeordnet sind, und bei dem Filterelement 3.4 handelt es sich um einen weiteren Filter.

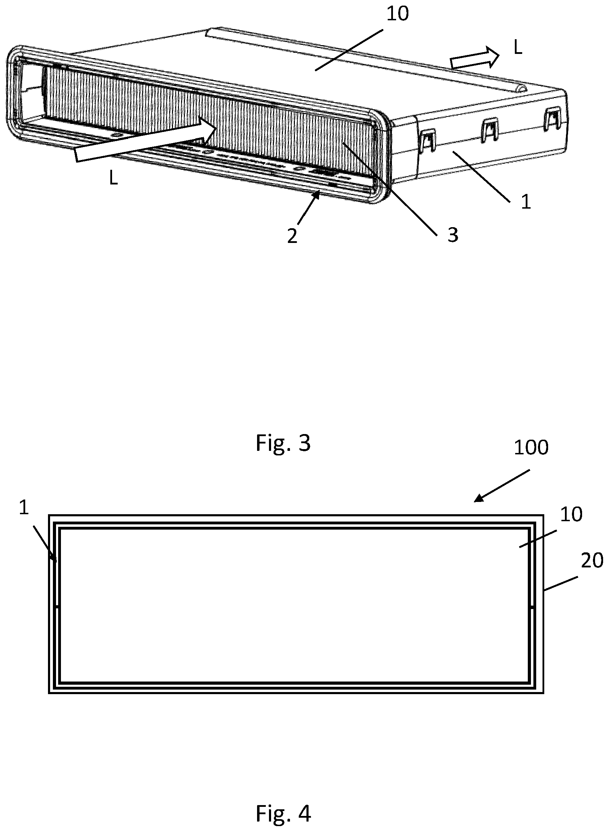

Fig. 3 zeigt eine räumliche Darstellung einer Ausführungsform eines Kassettenfilters 10, der von Luft L durchströmt wird. Der Kassettenfilter 10 besitzt einen quaderförmigen Filterrahmen 1 aus zwei Halbschalen 1.1, 1.2, der an zwei Stirnseiten geöffnet ist und von zu reinigender Luft L durchströmt werden kann. Filterrahmen 1 und Filterelemente 3 können der anhand der Figuren 1a - 2b beschriebenen Ausgestaltung entsprechen. In dem Filterrahmen 1 wird mindestens ein Filterelement 3 aufgenommen. In Figur 3 sichtbar ist nur ein Filterelement 3, welches als Faltenbalg ausgeführt ist. Denkbar ist jedoch auch, dass in dem Filterrahmen 1 mehrere in Reihe angeordnete Filterelemente 3 angeordnet sind und der Filter 10 einen sogenannten Multistage-Aufbau besitzt. Am außenseitigen Umfang des Filterrahmens 1 kann sich eine umlaufende Dichtung 2 befinden, welche eine Abdichtung des Filters 10 gegenüber einem hier nicht dargestellten Gehäuse 20 bewirken kann.

Fig. 4 zeigt eine grob schematische Ansicht einer Filteranordnung 100 mit einem Filter 10, der in einem Gehäuse 20 aufgenommen ist.

### Bezugszeichenliste

- 1: Filterrahmen
- 1.1: erstes Rahmenteil (Obere Halbschale)
- 1.2: zweites Rahmenteil (Untere Halbschale)
- 1.3: Rastelement (Rastnase)
- 1.4: Rastelement (Rastclipp)
- 1.5: erste Nase
- 1.6: zweite Nase
- 1.7: Steg
- 1.8: Positionier- und Arretierelement
- 1.9: Stoßkante
- 2: umlaufende Dichtung
- 3: Filterelement(e)
- 3.1: Filterelement der ersten Filterstufe
- 3.2: Filterelement der zweiten Filterstufe
- 3.3: Filterelement der dritten Filterstufe
- 3.4: Filterelement der vierten Filterstufe

- 10: Filter

- 20: Gehäuse

- 100: Filteranordnung

- L: Durchströmungsrichtung des Filters mit Luft

## Patentansprüche

1. Filter (10) zur Filtration von Luft (L) mit einem Filterrahmen (1) und mindestens einem Filterelement (3), welches in dem Filterrahmen (1) aufgenommen ist, **dadurch gekennzeichnet,**
**dass** der Filterrahmen (1) aus zwei Rahmenteilen (1.1, 1.2) besteht und dass das mindestens eine Filterelement (3) zwischen den zwei Rahmenteilen (1.1, 1.2) aufgenommen ist.

2. Filter nach Anspruch 1, **dadurch gekennzeichnet,**
**dass** die zwei Rahmenteile (1.1; 1.2) als zwei Halbschalen ausgeführt sind, welche identisch in Form und Aufbau sind.

3. Filter nach einem der vorangehenden Ansprüche, **dadurch gekennzeichnet,**
**dass** der Filter (10) einen mehrstufigen Aufbau besitzt und eine Mehrzahl von Filterelementen (3.1, 3.2, 3.3, 3.4) in Reihe in dem Filterrahmen (1) angeordnet sind.

4. Filter nach Anspruch 3, **dadurch gekennzeichnet,**
**dass** auf der Innenseite der zwei Rahmenteile (1.1, 1.2)
- umlaufende Stege (1.7) zur Abgrenzung der Filterelemente (3) verschiedener Filterstufen und/oder
- hervorstehende Positionier- und Arretierelemente (1.8) zum Positionieren und Arretieren der Filterelemente (3)
vorgesehen sind.

5. Filter nach einem der Ansprüche 2 bis 4, **dadurch gekennzeichnet, dass** Stoßkanten (1.9) der beiden Halbschalen (1.1, 1.2) als Labyrinthdichtung (1.5, 1.6) ausgestaltet sind.

6. Filter nach einem der Ansprüche 2 bis 5, **dadurch gekennzeichnet, dass** an den Halbschalen (1.1, 1.2) im Bereich ihrer Stoßkanten (1.9) Rastelemente (1.3, 1.4) zum Einklipsen der beiden Halbschalen (1.1, 1.2) ineinander vorgesehen sind, insbesondere mindestens vier Rastelementpaare.

7. Filter nach einem der vorangehenden Ansprüche, **dadurch gekennzeichnet,**
**dass** die Rahmenteile (1.1, 1.2) als Spritzgusselemente ausgeführt sind.

8. Filter nach Anspruch 7, **dadurch gekennzeichnet,**
**dass** als Material für die Rahmenteile (1.1, 1.2) ein spritzgussfähiger Kunststoff, insbesondere ein ABS, verwendet wird.

9. Filter nach einem der vorangehenden Ansprüche, **dadurch gekennzeichnet,**
**dass** an der Außenseite des Filterrahmens (1, 1.1, 1.2) eine Dichtung (2) angebracht ist zur Abdichtung des Filters (10) gegenüber einem Gehäuse (20).

10. Filter nach Anspruch 9, **dadurch gekennzeichnet,**
**dass** die Dichtung (2) als Spritzgusselement ausgeführt ist.

11. Filter nach Anspruch 10, **dadurch gekennzeichnet,**
**dass** als Material für die Dichtung (2) ein spritzgussfähiges Elastomer, insbesondere ein thermoplastisches Elastomer (TPE), verwendet wird.

12. Filteranordnung (100) mit einem Filter (10) nach einem der vorangehenden Ansprüche und mit einem Gehäuse (20) zur Aufnahme des Filters (10).
